# FASCICULE DE BREVET EUROPEEN

(11) **EP 0 599 969 B1**
(45) Date de publication et mention de la délivrance du brevet: **09.04.1997**
(21) Numéro de dépôt: 92918233.5
(22) Date de dépôt: 18.08.1992
(51) Int. Cl.: B32B 9/04, A41F 9/00

(54) **MATERIAU COMPOSITE ELASTIQUE A BASE DE CUIR**
Elastisches Verbundmaterial auf Lederbasis
LEATHER-BASED, ELASTIC COMPOSITE MATERIAL

(30) Priorité: 19.08.1991 FR 9110418; 13.03.1992 FR 9203027
(43) Date de publication de la demande: 08.06.1994
(73) Titulaire: JELAU, F-85510 Le-Boupère (FR); GABORIT, Jean, F-85510 Le-Boupère (FR)
(72) Inventeur: GABORIT, Jean, F-85510 Le-Boupère (FR)
(74) Mandataire: Schulz, Jean-Alain
(86) Numéro de dépôt international: FR9200799
(87) Numéro de publication internationale: WO9303918

(56) Documents cités:
- WO-A-89/07523
- GB-A- 2 210 325
- US-A- 3 860 469
- DATABASE WPI Week 2778, Derwent Publications Ltd., London, GB, AN 78-48326A; & JP-A-53 058 073
- DATABASE WPIL Week 8417, Derwent Publications Ltd., London, GB, AN 84-104479; & JP-A-59 047 484
- PATENT ABSTRACTS OF JAPAN (NIPPON KOGYO KK), 10 Novembre 1989; & JP-A-12 80 403

## Description

La présente invention concerne un matériau composite à base de cuir comprenant :
- une âme constituée par une feuille élastique pouvant être sensiblement allongée de façon réversible sous l'effet d'une traction selon au moins une direction d'élasticité ;
- sur l'une au moins des faces de l'âme et adhérant fermement à cette dernière en tous les points de la surface de celle-ci, une feuille de cuir qui a été collée sur la feuille élastique alors que celle-ci était étirée et allongée sous l'effet d'une traction prédéterminée inférieure à sa limite élastique, cette traction ayant été supprimée après la prise de la colle ;
- la feuille élastique développant à l'état étiré une force de rappel prédéterminée suffisante pour permettre le retrait du matériau composite lorsque ladite traction est supprimée.

La présente invention concerne également un objet fabriqué en utilisant le matériau composite précité.

La présente invention concerne en outre un procédé pour réaliser la plus grande partie de la tige d'une chaussure en matériau composite précité.

On connaît un tel matériau, notamment d'après le FR-91 10418 au nom du présent demandeur, dont l'enseignement doit être considéré comme faisant partie de la présente demande.

Ladite demande antérieure décrit un matériau du type précité dans lequel chaque feuille de cuir est une feuille de cuir souple et mince du genre box ou cuir velours ou velouté, et a une épaisseur sensiblement comprise entre 0,2 et 1 mm, ou une feuille d'un succédané quelconque connu du cuir de texture similaire. L'aspect velouté ne laisse pas apparaître le grain du cuir.

On trouve actuellement dans le commerce des chaussures du type sandale comportant une sangle qui passe autour du talon et qui est en matériau composite du type ci-dessus : une telle sangle élastique permet d'éviter un moyen réglable de fixation tel qu'une boucle ou une pression. Cette sangle est en général constituée d'une âme élastique d'environ 1 mm d'épaisseur recouverte par une feuille de cuir d'une épaisseur de l'ordre de 0,8 à 1 mm qui est repliée sur les deux faces de l'âme. Une telle sangle maintient bien la chaussure sur le pied. Par contre, la surface apparente de chaque feuille de cuir présente un grain très grossier et des plis profonds. Un tel matériau est impropre à la réalisation de toute autre partie d'une chaussure.

On trouve également dans le commerce des chaussures du genre mocassin montant relativement haut sur le cou-de-pied. Pour supprimer tout système de fermeture, du genre laçage ou autre, tout en permettant d'enfiler facilement la chaussure sur le pied et d'assurer un confort maximal du pied, ces chaussures sont munies, au niveau du cou-de-pied, ou de part et d'autre de celui-ci, d'un ou de plusieurs morceaux d'un matériau composite du type précité, de forme sensiblement trapézoïdale : ces morceaux sont adaptés à s'étendre transversalement pour permettre le passage du pied, et à rester à l'état légèrement tendu sur le cou-de-pied.

Le matériau correspondant a une épaisseur au repos d'environ 1,8 mm, et est constitué, du côté du pied, d'un tissu élastique d'environ 1 mm d'épaisseur, et, du côté de l'extérieur, d'une feuille de cuir d'environ 0,8 mm d'épaisseur.

La face extérieure du cuir présente un grain nettement marqué qui ne serait pas accepté par la clientèle si ce matériau devait constituer tout ou presque tout le dessus de la chaussure. De même, les clients n'acceptent le contact direct du pied avec le tissu élastique que parce que ce contact est limité à une faible surface, et parce que ce contact désagréable doit être supporté pour obtenir le confort qu'apportent lesdites chaussures.

On sait que, d'une manière générale, on n'utilise pas, pour la fabrication de chaussures, de feuilles de cuir d'épaisseur inférieure à 0,8 mm environ : ces feuilles sont des feuilles de cuir refendu pour obtenir cette épaisseur.

En effet, les spécialistes de cette industrie considèrent qu'une feuille de cuir refendu d'épaisseur inférieure est trop souple, manque trop de rigidité et de tenue, pour être utilisable dans la confection du dessus d'une chaussure.

On connaît par contre des feuilles de cuir refendu ayant une épaisseur de l'ordre de 0,3 ou 0,4 mm. Ces feuilles extrêmement souples sont utilisées dans l'habillement. Elles sont également utilisées dans l'industrie de la chaussure comme parement collé sur des talons en bois ou en matière plastique. Il s'agit dans ce cas de cuir d'excellente qualité, fleur, veau, chèvre. Ces feuilles sont considérées comme inutilisables pour la fabrication du dessus d'une chaussure.

Le but de la présente invention est de remédier aux inconvénients des matériaux composites connus, et de proposer un matériau composite du type précité ne présentant qu'un grain très léger, même avec des feuilles de cuirs de qualité médiocre, et parfaitement adapté, tant pas ses caractéristiques mécaniques et sa tenue que par son aspect extérieur et son épaisseur, à la fabrication de la plus grande partie du dessus d'une chaussure.

Le but de l'invention est également de proposer un objet fabriqué en utilisant ce matériau, et un procédé pour réaliser la plus grande partie de la tige d'une chaussure en utilisant ce matériau.

Suivant l'invention, le matériau composite du type précité est caractérisé en ce que chaque feuille de cuir a une épaisseur comprise entre 0,2 et 0,6 mm environ.

Alors que des feuilles de cuir de cette épaisseur n'ont pas de tenue par elles-mêmes, et qu'une feuille élastique n'en a pas non plus, le présent inventeur à découvert que, de façon surprenante et imprévisible, et contrairement à l'enseignement de l'art antérieur connu, le matériau composite de l'invention a une rigidité, une résistance, une tenue, suffisantes pour pouvoir être utilisé à la place d'une feuille de cuir d'épaisseur comparable dans l'industrie de transformation du cuir, par exemple l'ameublement ou l'industrie de la chaussure.

Par ailleurs, et contrairement à ce que l'on pouvait craindre, le grain de la face extérieure de la feuille de cuir est nettement moins apparent que sur les matériaux composites de l'art antérieur, ce qui donne au matériau un aspect esthétique très voisin de celui d'un cuir de bonne qualité.

Le présent inventeur pense, sans que cela ait pu être vérifié de manière scientifique, que les pores du cuir se referment d'une manière d'autant plus complète et plus régulière que la feuille de cuir refendu a une épaisseur plus faible.

Enfin, et comme les matériaux composites connus de l'art antérieur, le matériau composite de la présente invention présente à la fois les avantages du cuir, (tenue, aspect esthétique agréable) et ceux d'un matériau élastique (souplesse et confort, par son aptitude à épouser sans blesser la forme du pied quelle que soit cette forme).

Suivant une version avantageuse de la présente invention, chaque feuille de cuir a une épaisseur comprise entre 0,2 et 0,4 mm environ, et la feuille élastique est un tissu élastique comportant des fibres élastiques dans au moins une direction de tissage.

Un tel matériau a une tenue suffisante pour être utilisé à la place du cuir, et a en général une épaisseur, de l'ordre de 1,4 à 2,0 mm, particulièrement adaptée à la fabrication de dessus de chaussures. Ce matériau a également, comme le cuir, une certaine porosité, et donc une aptitude à "respirer", c'est-à-dire à éliminer les effets de la transpiration, ce qui est important pour la fabrication du dessus d'une chaussure.

Suivant une version préférée de l'invention, le coefficient d'allongement du matériau composite est compris entre 5 et 15 % environ.

Dans ces conditions, le retrait de chaque feuille de cuir est suffisamment limité pour qu'il n'apparaisse pratiquement pas de grain visible sur la surface extérieure de celle-ci, et le matériau de l'invention peut être utilisé pour la fabrication de tous les types de chaussures.

En particulier, on peut utiliser pour réaliser le matériau de l'invention des feuilles de cuirs de qualité médiocre, notamment des feuilles refendues dans la croûte d'une peau naturelle.

Suivant un autre aspect de la présente invention, l'objet conforme à celle-ci est caractérisé en ce qu'il est fabriqué en utilisant le matériau composite conforme à l'invention.

Suivant un troisième aspect de l'invention, le procédé visé par celle-ci pour réaliser la plus grande partie de la tige d'une chaussure en matériau composite conforme au premier aspect de celle-ci comporte les étapes qui consistent à :
- préparer au moins une feuille dudit matériau composite ayant une longueur, une largeur et une épaisseur prédéterminées ;
- découper dans ladite feuille, suivant le patron prévu, le ou les morceaux destinés à former ladite tige ;
- le cas échéant, découper dans d'autres feuilles d'un autre matériau approprié non-élastique d'autres morceaux nécessaires pour compléter ladite tige ;
- assembler par piqure lesdits morceaux pour former ladite tige ;
- placer la tige sur une forme pour monter et terminer la chaussure.

Suivant l'invention, ce procédé est maintenant caractérisé en ce qu'il comporte également les étapes suivantes :
- avant de découper les morceaux de matériau composite, on détermine ceux de ces morceaux qui devront être légèrement étirés selon au moins une direction lorsque la chaussure sera en position sur le pied de la personne qui la portera, et on calcule en fonction de cet étirement prévu de chaque morceau correspondant une forme de celui-ci présentant dans ladite direction d'étirement une dimension plus petite que celle qu'aurait le même morceau s'il était réalisé en cuir ordinaire ;
- lors de l'assemblage de ladite tige, on étire lesdits morceaux selon les prévisions, et on limite cet étirement à la valeur prévue en fixant sur ladite tige des bandes de longueur prédéterminée d'un matériau non-élastique que l'on élimine lorsque la chaussure est terminée.

D'autres particularités et avantages de l'invention apparaîtront dans la description détaillée ci-après.

Aux dessins annexés, donnés uniquement à titre d'exemples non limitatifs :
- la figure 1 est une vue de dessus d'un premier mode de réalisation d'un matériau conforme à l'invention ;
- la figure 2 est une vue en coupe transversale selon II-II de la figure 1 ;
- la figure 2A est une vue semblable à la figure 2 d'un autre mode de réalisation de l'invention ;
- les figures 3 et 4 sont des vues de dessus respectives d'un morceau de cuir et d'un morceau de tissu élastique destinés à être combinés pour réaliser le matériau de la figure 1 ;
- les figures 5 et 6 sont respectivement une vue de dessus et une vue en coupe transversale selon VI-VI, d'un deuxième mode de réalisation conforme à l'invention ;
- la figure 6A est une vue semblable à la figure 6 d'un autre mode de réalisation de l'invention ;
- la figure 7 est une vue en perspective d'un troisième mode de réalisation d'un matériau conforme à l'invention ;
- la figure 8 est une vue schématique en perspective montrant l'une des phases d'un procédé de fabrication du matériau de la figure 7 ;
- la figure 9 montre de façon similaire une étape suivante du procédé en question ;
- les figures 10 à 13 sont des vues schématiques en perspective de diverses chaussures réalisées conformément à l'invention.
- la figure 14 est une demi-vue de dessus agrandie d'un morceau du matériau composite de l'invention prévu pour réaliser la partie avant de la chaussure de la figure 13 ;
- la figure 15 est une vue semblable à la figure 14 du morceau prévu pour réaliser la partie latérale de la chaussure de la figure 13 ;
- la figure 16 est une vue schématique en perspective illustrant le procédé de l'invention pour réaliser la chaussure de la figure 13 à partir des morceaux des figures 14 et 15.

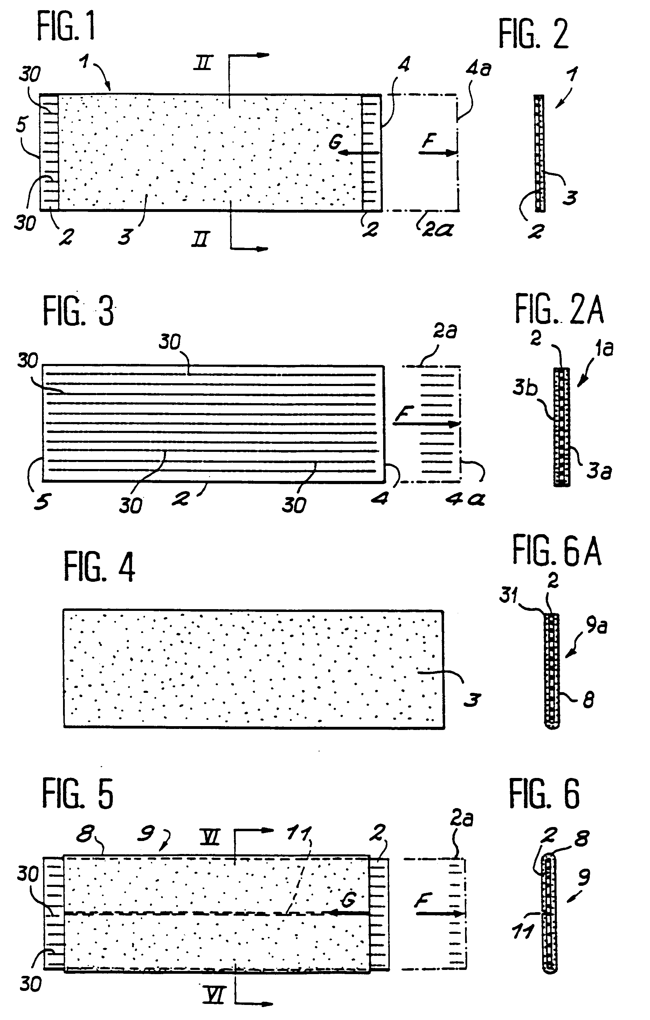

Un premier type de matériau à base de cuir conforme à l'invention est représenté sur les figures 1 à 4 où il est désigné par le repère 1.

Dans l'exemple considéré, à élasticité unidirectionnelle, le matériau composite 1 se compose d'une âme constituée par une bande de tissu élastique 2 à élasticité longitudinale ; la bande 2 est représentée dans son état normal en traits pleins aux figures 1 et 3. Par une traction F selon cette direction longitudinale, on peut amener de façon réversible le bord 4 en position 4a par déformation élastique, l'autre bord 5 étant supposé fixe. La force de traction F (voir figures 1 et 3) a une valeur prédéterminée inférieure à la limite élastique dudit tissu élastique 2, qui est ainsi allongé comme représenté en 2a en traits mixtes aux figures 1 et 3.

L'autre constituant du matériau composite 1 est une feuille de cuir 3 représentée dans son état naturel à la figure 4.

Les composants 2 et 3 sont rendus fermement adhérents l'un à l'autre par une colle souple de cordonnerie, alors que l'âme 2 est en extension en 2a sous l'effet de la traction F et présente une longueur au moins égale à celle de la feuille de cuir 3 au repos. On supprime cette traction après la prise de la colle. Ainsi, dans le matériau fini 1, l'âme élastique 2 est maintenue par la feuille de cuir 3 sous légère tension résiduelle, alors que la feuille de cuir 3 adjacente est maintenue en compression longitudinale par la force G de rappel, comme représenté en traits pleins à la figure 1.

La feuille élastique 2 est choisie de façon à développer à l'état étiré une force de rappel G prédéterminée suffisante pour permettre le retrait du matériau composite lorsque ladite traction est supprimée.

Dans cet exemple, la feuille élastique 2 est un tissu élastique comportant des fibres élastiques 30 s'étendant dans la direction longitudinale du tissu et constituant au moins en partie la chaîne dudit tissu. La trame dudit tissu est constituée, de manière classique connue, par des fils textiles faits de fibres naturelles et/ou artificielles, coton, polyester, polyamide, etc...

La bande élastique 2 peut être par exemple un tissu élastique de composition :
I. Elastomère (caoutchouc) : 37 %
   Coton : 34 %
   Polyester : 29 %
   ou bien :
II. Elastomère : 45 %
   Coton : 7 %
   Polyamide : 48 %.

Cette bande peut être étirée élastiquement dans le sens de la longueur.

Suivant l'invention, la feuille 3 de cuir refendu a une épaisseur comprise entre 0,2 et 0,6 mm environ, avantageusement entre 0,2 et 0,4 mm environ. L'épaisseur préférée est de 0,3 mm environ.

Cette feuille de cuir peut être refendue dans une peau tannée de veau, de chevreau, particulièrement souple et douce. Elle peut également être refendue dans une peau de vache, non seulement dans la fleur, mais également dans la croûte de celle-ci.

En effet, des feuilles de croûte de cuir de faible épaisseur présentent des qualités de souplesse suffisantes pour être utilisées sous la forme du matériau composite de l'invention, dans la fabrication de chaussures ou dans l'ameublement.

Il est préférable de ne pas rechercher une épaisseur inférieure à 0,2 mm environ, pour laquelle les conditions de refente du cuir deviennent très délicates et les caractéristiques mécaniques du cuir deviennent insuffisantes.

Pour une épaisseur supérieure à 0,6 m environ, le matériau composite présente un grain trop marqué et n'est plus utilisable pour la fabrication du dessus d'une chaussure classique.

La colle utilisée est une colle de cordonnerie du commerce, par exemple une colle à base de néoprène et de solvants cétoniques. On peut également utiliser des colles à base de latex ou de polyuréthane.

Dans le mode de réalisation de la figure 2A, le matériau composite la est constitué d'une âme 2 en tissu élastique recouverte sur ses deux faces, dans les conditions décrites pour le mode de réalisation des figures 1 à 4, d'une feuille de cuir, respectivement 3a, 3b, d'une épaisseur comprise entre 0,2 et 0,6 mm environ.

Un deuxième type de matériau conforme à l'invention est représenté sur les figures 5 et 6 où il est désigné par la référence 9.

Ici, les deux faces de l'âme de tissu élastique 2 à élasticité longitudinale sont recouvertes d'une feuille de cuir 8 qui enveloppe complètement la bande élastique 2 et a par conséquent une largeur initiale double de celle de l'âme 1, la longueur de la feuille 8 correspondant sensiblement à celle de l'âme 1 en position d'extension élastique maximale sous l'effet de la traction F (position 2a en traits mixtes sur la figure 5).

Les deux bords longitudinaux de la feuille de cuir 8 se rejoignent sensiblement selon une ligne de jonction 11 suivant une des faces de la bande composite ainsi formée. On peut aussi, si on le désire, faire en sorte que les deux bords de la feuille 8 soient en 31 à l'aplomb de l'un des bords longitudinaux de l'âme 2, comme représenté à la figure 6A pour le matériau composite 9a.

Les autres caractéristiques des composants du matériau 9, 9a étant identiques à celles précédemment indiquées pour le matériau 1, le taux d'allongement réversible maximal d'un tel matériau à deux couches de cuir est compris entre 20 et 25 %.

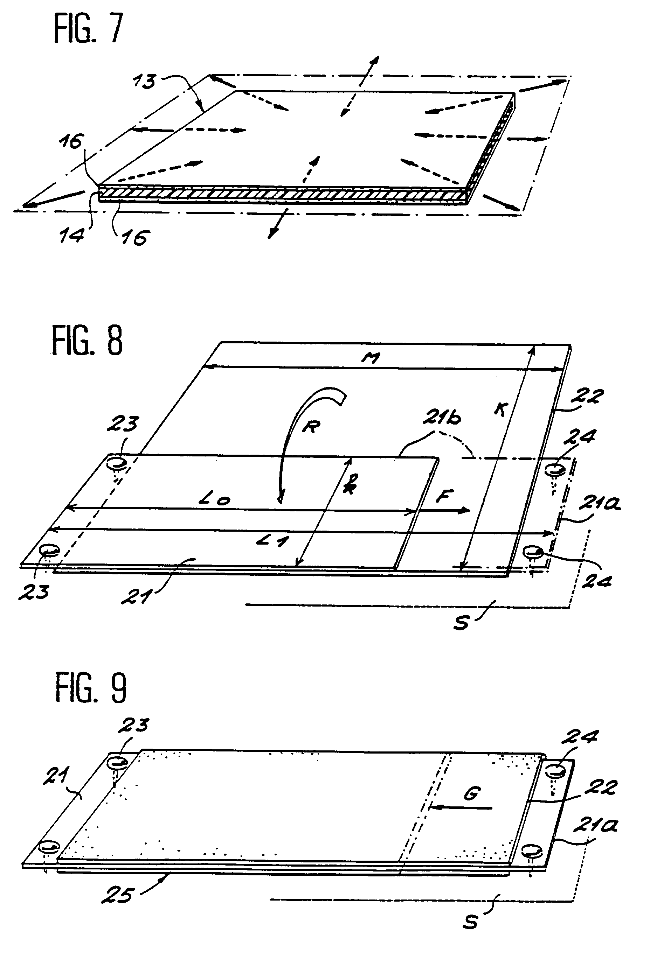

Un troisième type de matériau conforme à l'invention est représenté sur la figure 7 où il porte la référence 13. Il comporte une âme centrale formée par une feuille de caoutchouc 14 ayant une épaisseur sensiblement comprise entre 0,5 mm et 2 mm, par exemple une épaisseur d'environ 1 mm, sur laquelle sont collées respectivement de part et d'autre deux couches de cuir d'épaisseur égale à environ 0,3 mm. La colle utilisée est identique à celle correspondant aux deux premiers matériaux 1 et 9.

Ce troisième type de matériau 13 a l'intérêt de présenter une élasticité multidirectionnelle (schématisée par les diverses flèches), ce que ne possédaient pas les deux premiers types. Toutefois, son taux d'allongement réversible, compris entre 10 % et 15 % , est sensiblement inférieur.

On notera que dans l'exemple considéré l'un des bords de l'âme 14 est également recouvert par la feuille.

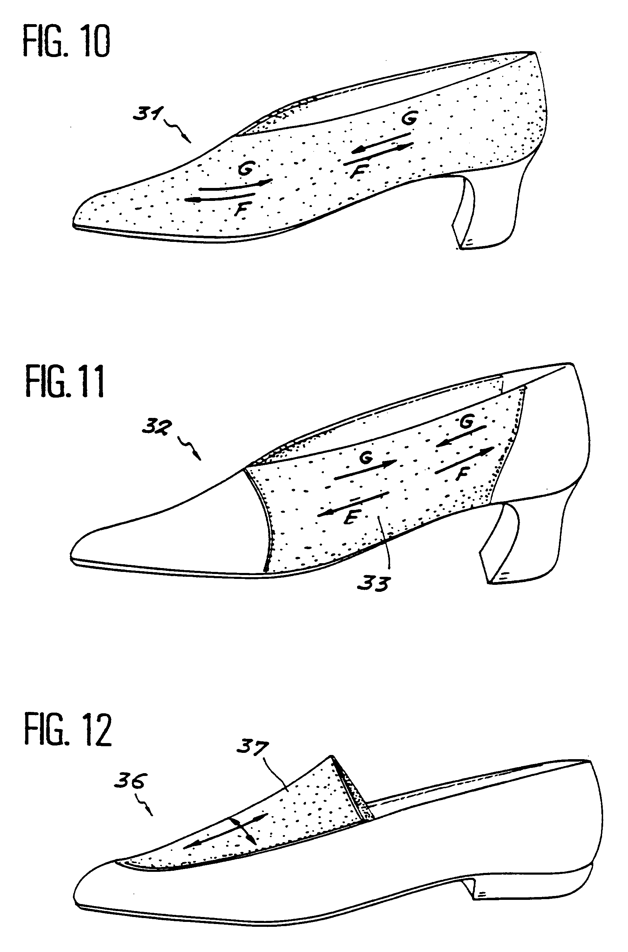

Le procédé de fabrication d'un matériau conforme à l'invention à double face garnie de cuir, y compris l'un des bords de l'âme élastique, est illustré sur les figures 8 et 9.

On part d'une bande de tissu élastique 21 à élasticité longitudinale, analogue par exemple à la bande 2 de la figure 3, cette bande ayant à l'état détendu une longueur L0 proche de celle du matériau fini, puis parallèlement, on découpe une feuille de cuir souple 22 en lui donnant une longueur M légèrement inférieure à la longueur L1 de l'âme 21 en position d'extension élastique maximale selon F. On donne aussi à la feuille 22 une largeur K sensiblement double de celle k de l'âme 21.

Après avoir encollé les deux faces de l'âme 21 et la face supérieure de la feuille 22, supposée mise à plat sur un support S, on fixe par des moyens quelconques tels que des pointes 23 sur ledit support S l'âme 21, on l'amène par traction suivant F à sa position d'extension élastique maximale 21a en l'appliquant sur la feuille 22 et on la fixe en cette position par d'autres pointes 24.

On rabat alors suivant R la feuille 22 autour du bord 21b de l'âme 21 de manière que les trois bords longitudinaux de l'âme 21 et de la feuille 22, coïncident (figure 9). On maintient le matériau sandwich ainsi constitué sous forte pression jusqu'à prise finale de la colle, laquelle doit rester souple à ce stade. Puis on retire les pointes 24. Le matériau composite se rétracte alors suivant G, l'âme 21 reprenant une longueur voisine de L0. Le collage intime des pièces 21 et 22 empêche le cuir de gondoler de sorte qu'extérieurement il ne se forme que des plis pratiquement invisibles.

On obtient ainsi une feuille composite 25 qui peut ensuite être découpée à la demande selon tout contour approprié. En particulier, les parties débordantes de l'âme 21 peuvent être éliminées par découpe.

Le procédé que l'on vient de décrire, qui correspond à la réalisation d'un matériau à base de cuir à élasticité contrôlée unidirectionnelle, est immédiatement transposable à la réalisation d'un matériau conforme aux figures 1 et 2 ou 5 et 6.

Ce procédé est également aisément transposable à la réalisation d'un matériau à élasticité multidirectionnelle, à partir d'une âme élastique dotée elle-même d'une élasticité multidirectionnelle.

On peut, dans ce cas, tendre l'âme élastique selon deux directions perpendiculaires l'une à l'autre, et la fixer dans ce double état de tension, un deuxième groupe de pointes correspondant à une deuxième direction de tension perpendiculaire à la première.

Suivant une version préférée du procédé ci-dessus, on tend également chaque feuille de cuir avant de la coller sur la feuille élastique.

On sait que le cuir n'est pas élastique, mais peut être déformé de manière non réversible par étirement : un tel étirement a notamment pour effet d'agrandir les pores du cuir. Lorsque la feuille de cuir ainsi étirée est collée sur une feuille élastique elle-même à l'état étiré, le retrait de la feuille élastique, lorsqu'on relâche la force de traction à laquelle elle était soumise, entraîne également le retrait de la feuille de cuir qui commence par reprendre sa dimension initiale avant de subir, le cas échéant, un retrait supplémentaire.

On arrive ainsi à diminuer encore le léger grain apparent à la surface du matériau composite de l'invention, si l'on ne recherche pas pour celui-ci un coefficient d'allongement trop important.

De nombreuses applications du matériau de l'invention sont envisageables, en particulier dans le domaine de la chaussure et de l'habillement.

Ainsi, un matériau composite constitué par une âme en tissu élastique d'épaisseur 1,0 mm environ, et, de part et d'autre de celle-ci, deux feuilles de cuir refendu ayant chacune une épaisseur de 0,3 mm environ, a une épaisseur de 1,6 mm environ particulièrement adaptée à la fabrication de dessus de chaussures de femmes.

La même âme de 1,0 mm avec deux feuilles de cuir d'épaisseur 0,4 ou 0,5 mm donne un matériau d'épaisseur 1,8 ou 2,0 mm parfaitement adapté à la fabrication de dessus de chaussures d'hommes.

On peut bien entendu utiliser un tissu élastique d'épaisseur différente, dès lors que la force de rappel de ce tissu est suffisante pour permettre le retrait du cuir et du matériau composite après le collage lorsqu'on supprime la traction sur le tissu élastique.

Si on tend au maximum le tissu élastique, on obtient un matériau composite dont le coefficient d'allongement maximal peut atteindre 30 à 40 % dans le cas d'une seule couche de cuir, et 25 à 30 % dans le cas de deux couches de cuir.

Dans le matériau préféré comportant deux feuilles de cuir d'épaisseur 0,2 à 0,4 mm, de préférence 0,3 mm, on fait en sorte que le coefficient d'allongement du matériau soit compris entre 5 et 15 % ; un tel coefficient est en général suffisant pour obtenir le confort recherché pour le pied dans une chaussure, alors que le retrait du cuir est suffisamment limité pour ne donner au cuir qu'un grain à peine perceptible.

Pour la fabrication d'une chaussure, on peut bien entendu utiliser un matériau composite à trois épaisseurs comportant une feuille de cuir extérieure, destinée à être apparente, d'une première qualité de cuir et d'une première couleur, et une feuille de cuir intérieure, non apparente, d'une autre qualité, en général moins bonne, par exemple en croûte, et d'une autre couleur.

Si le bord apparent du matériau composite montre les trois épaisseurs, on peut bien entendu le cacher d'une manière connue quelconque : on peut ainsi, par exemple, faire une piqûre à points serrés tout le long de ce bord : une telle piqûre ne s'oppose pas à la dilatation élastique de ce bord. On peut également, par exemple, recouvrir ce bord d'une mince bande de cuir.

On peut également utiliser comme feuille extérieure une feuille d'un succédané de cuir, par exemple d'un matériau composite constitué d'une feuille de cuir très mince sur laquelle est collée une mince pellicule d'une matière telle que du polyuréthane : la feuille de cuir peut être de la croûte de cuir, peu onéreuse, et la pellicule peut être du polyuréthane microporeux, pour former un matériau composite économique qui respire comme le cuir, et qui est bien adapté à la fabrication de dessus de chaussures.

Pour l'ameublement, par exemple pour des sièges, il suffit évidemment d'une unique feuille de cuir collée sur la face extérieure de la feuille élastique. Cette feuille n'a pas besoin d'être poreuse comme pour le dessus d'une chaussure, et peut donc être une feuille d'élastomère.

Il en est de même pour des revêtements muraux à poser à l'état légèrement tendu sur des attaches fixées à un mur.

Des chaussures réalisées conformément à l'invention sont représentées sur les figures 10 à 12.

La chaussure de la figure 10, comporte une tige 31 constituée en totalité par le matériau à base de cuir de l'invention, ce matériau ayant une élasticité unidirectionnelle orientée longitudinalement (flèches F et G) par rapport à la chaussure.

La chaussure de la figure 11 comporte une tige 32 ayant seulement les parties latérales centrales 22 en matériau de l'invention à élasticité unidirectionnelle orientée longitudinalement (flèches F, G).

La chaussure de la figure 12 comporte une tige 36 dont une partie 37, correspondant approximativement au cou-de-pied, est formée d'un matériau conforme à l'invention à élasticité multidirectionnelle. On pourrait aussi prévoir seulement une direction d'élasticité transversale par rapport à la chaussure.

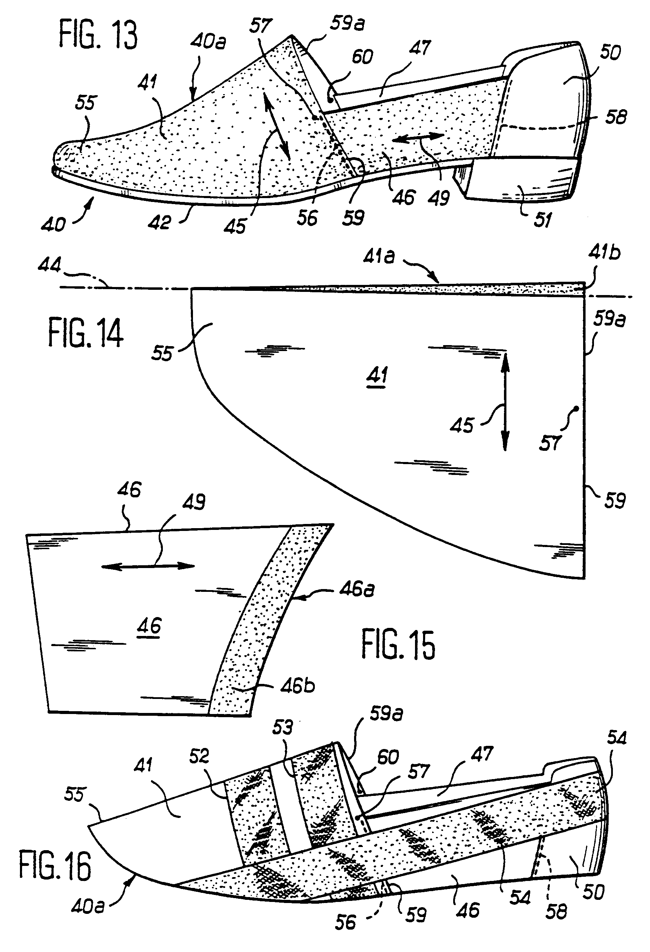

La tige 40a de la chaussure 40 représentée à la figure 13 comporte une partie avant 41 d'une seule pièce qui recouvre tout le pied d'un bord à l'autre de la semelle 42. Cette partie avant est constituée par un morceau 41 de matériau composite élastique de l'invention, dont seule la moitié visible à la figure 13 est représentée à la figure 14 et est limitée par l'axe 44.

Le morceau 41 a été découpé dans une feuille de cuir composite élastique de l'invention de manière que la direction d'élasticité soit transversale à la chaussure 40, comme représenté par la double flèche 45.

La tige 40a comporte également deux parties latérales 46, 47 qui sont constituées par deux morceaux symétriques également en matériau élastique de l'invention. Le morceau 46, représenté à la figure 15, a été découpé dans la même -ou dans une autre- feuille de matériau composite élastique de façon que sa direction d'élasticité soit sensiblement la direction longitudinale de la chaussure 40, comme représenté par la double flèche 49.

La tige 40a comporte enfin une partie arrière 50 qui est réalisée en cuir ordinaire, comme la semelle 42 et le talon 51.

Le procédé pour réaliser la plus grande partie de la tige 40a de la chaussure 40 en matériau composite conforme à l'invention comporte les étapes classiques qui consistent à :
- préparer au moins une feuille dudit matériau composite ayant une longueur, une largeur et une épaisseur prédéterminées ;
- découper dans ladite feuille, suivant le patron prévu, le ou les morceaux 41, 46, 47 destinés à former ladite tige 40a ;
- le cas échéant, découper dans d'autres feuilles d'un autre matériau approprié non élastique d'autres morceaux, tels que 50, nécessaires pour compléter ladite tige 40a ;
- assembler par piqure tous lesdits morceaux 41, 46, 47, 50, pour former ladite tige 40a ;
- placer la tige 40a sur une forme (non représentée) pour monter et terminer la chaussure 40.

Suivant l'invention, ce procédé comporte également les étapes suivantes :
- avant de découper les morceaux 41, 46, 47 de matériau composite, on détermine ceux de ces morceaux 41, 46, 47, qui devront être légèrement étirés selon au moins une direction lorsque la chaussure 40 sera en position sur le pied de la personne qui la portera, et on calcule en fonction de cet étirement prévu de chaque morceau 41, 46, 47 correspondant une forme de celui-ci présentant dans ladite direction d'étirement 45, 49, une dimension plus petite que celle qu'aurait le morceau correspondant 41a, 46a, 47a s'il était réalisé en cuir ordinaire ;
- lors de l'assemblage de ladite tige 40a, on étire lesdits morceaux 41, 46, 47 selon les prévisions, et on limite cet étirement à la valeur prévue en fixant sur ladite tige 40a des bandes 52, 53, 54 de longueur prédéterminée d'un matériau non-élastique que l'on élimine lorsque la chaussure 40 est terminée.

Ainsi, comme représenté à la figure 14, le morceau 41 diffère de la forme du morceau 41a correspondant en cuir ordinaire par une mince bande triangulaire 41b en position médiane qui va se rétrécissant du cou-de-pied vers la pointe de la chaussure, ce qui est normal car le bout 55 de la chaussure n'est pas destiné à s'étirer. Seule la moitié de la bande 41b est représentée à la figure 14.

De même, on voit à la figure 15 que le morceau 46 diffère du morceau 46a correspondant en cuir ordinaire par une bande 46b prélevée sur toute la hauteur dudit morceau.

On a représenté schématiquement à la figure 16 la tige 40a assemblée avant montage de la chaussure 40. Le morceau 46 est cousu, d'un côté au bord correspondant du morceau 41 par la piqure 56 schématisée en tirets et qui s'étend jusqu'au point de repère 57, de l'autre côté au talon 51 par la piqure 58 également schématisée en tirets.

Deux bandes non-élastiques 52 et 53 ont été fixées au morceau 41 sur son bord arrière 59 qui entoure le cou-de-pied, pour limiter à la valeur prédéterminée son étirement dans le sens de la flèche 45 lors du montage de la chaussure 40. Une bande 54 a été fixée le long de la partie latérale 46 pour limiter de même son étirement dans le sens de la flèche 49.

On notera, en ce qui concerne le morceau 41, que la piqure 56 le long du morceau 46 empêche tout étirement du bord arrière 59 de ce morceau 41 entre la semelle 42 et le point de repère 57 qui limite ladite piqure 56, et qu'il en est de même de l'autre côté de la chaussure 40 : ainsi seule la partie 59a dudit bord arrière 59 comprise entre le point de repère 57 et le point de repère correspondant 60 situé de l'autre côté de la chaussure 40 peut s'étirer. Par contre, le reste du morceau 41, à l'exception du bout 55 renforcé intérieurement par un bout dur classique (non représenté), peut s'étirer librement, en particulier au niveau des orteils, pour s'adapter à la forme du pied et aux conditions de marche et procurer ainsi une impression de grand confort.

Dans l'exemple représenté aux figures 13 à 16, le matériau composite élastique comporte à l'extérieur une feuille de veau, lisse, et a un coefficient d'étirement de l'ordre de 20 % environ : dans cet exemple, la bande 46b a une largeur de l'ordre de 13 % de la largeur initiale du morceau 46a, et le bord côté cou-de-pied de la bande 41b a une longueur de l'ordre de 6 % de celle du bord correspondant du morceau 41a.

On voit ainsi que le bord 49a peut s'étirer de façon importante pour permettre l'introduction du pied dans la chaussure 40, et reste légèrement tendu pour maintenir la chaussure sur le pied.

Le morceau 46 peut s'étirer un peu lors de l'introduction du pied et peut se rétrécir notablement pour suivre le plissement de la chaussure pendant la marche sans s'écarter vers l'extérieur, et participe également au maintien de la chaussure sur le pied.

Dans le domaine de l'habillement, le matériau de l'invention présente un grand intérêt pour réaliser au moins en partie une bande de ceinture. Une telle ceinture, qui a l'aspect esthétique du cuir et qui conserve sa capacité de maintien transversal, a de plus une intéressante possibilité d'allongement longitudinal qui permet de rattraper commodément un écart éventuel trop important entre deux crans successifs de la ceinture.

Une autre application est la réalisation de courroies de transmission de faible puissance, où l'on a à la fois les propriétés d'adhérence du cuir et d'élasticité évitant les à-coups. D'autres applications du matériau selon l'invention sont prévues en chapellerie (par exemple casquettes) dans les vêtements en peau pour donner souplesse et élasticité, ainsi que dans l'ameublement ou l'automobile pour équiper notamment des sièges garnis de cuir ou des panneaux décoratifs rigides ou souples avec face apparente seule recouverte de cuir.

Bien entendu, l'invention n'est pas limitée aux exemples de réalisation que l'on vient de décrire, et on peut leur apporter de nombreuses modifications sans sortir du cadre de cette invention. Ainsi, dans le domaine vestimentaire, il peut être avantageux de coller sur une même âme élastique plusieurs pièces de cuir d'origines ou de colorations différentes, afin de varier la présentation.

On notera que le matériau de l'invention peut s'étirer "en diagonale" suivant une direction quelconque : ceci est évident si l'âme est une feuille élastique qui a été étirée suivant deux directions. Si l'âme est un tissu élastique comportant des fils élastiques s'étendant dans une première direction et des fils textiles s'étendant dans la direction perpendiculaire à la première, et si l'on étire en diagonale ledit tissu, les fils élastiques s'étendent longitudinalement tandis que les fils textiles non-élastiques peuvent glisser les uns par rapport aux autres dans le sens de leur longueur, de sorte que le tissu élastique se déforme "en diagonale" et qu'il en est de même pour le matériau conforme à l'invention.

## Revendications

1. Matériau composite (1, 1a, 9, 9a, 13) à base de cuir, comprenant :
- une âme (2, 14, 21) constituée par une feuille élastique pouvant être sensiblement allongée de façon réversible sous l'effet d'une traction (F) selon au moins une direction d'élasticité ;
- sur l'une au moins des faces de l'âme (2, 14, 21) et adhérant fermement à cette dernière en tous les points de la surface de celle-ci, une feuille (3, 3a, 3b, 8, 16, 22) de cuir qui a été collée sur la feuille élastique (2, 14, 21) alors que celle-ci était étirée et allongée sous l'effet d'une traction (F) prédéterminée inférieure à sa limité élastique, cette traction ayant été supprimée après la prise de la colle ;
- la feuille élastique (2, 14, 21) développant à l'état étiré une force de rappel (G) prédéterminée suffisante pour permettre le retrait du matériau composite (1, 1a, 9, 9a, 13) lorsque ladite traction (F) est supprimée ;
caractérisé en ce que chaque feuille (3, 3a, 3b, 8, 16, 22) de cuir a une épaisseur comprise entre 0,2 et 0,6 mm environ.

2. Matériau selon la revendication 1, caractérisé en ce que son taux d'allongement élastique est compris entre 5 % et 40 % environ.

3. Matériau selon l'une des revendications 1 ou 2, caractérisé en ce que son taux d'allongement élastique est compris entre 5 et 15 % environ.

4. Matériau élastique conforme à l'une des revendications 1 à 3, caractérisé en ce que chaque feuille de cuir a une épaisseur comprise entre 0,2 et 0,4 mm environ.

5. Matériau composite (1, 9, 13) conforme à l'une des revendications 1 à 4, caractérisé en ce que la feuille élastique est un tissu élastique comportant des fibres élastiques dans au moins une direction de tissage.

6. Matériau selon l'une des revendications 1 à 4, caractérisé en ce que l'âme est formée par une feuille homogène (14) d'élastomère, extensible en toutes directions dans son plan.

7. Objet, caractérisé en ce qu'il est fabriqué en utilisant le matériau composite conforme à l'une quelconque des revendications 1 à 6.

8. Procédé pour réaliser la plus grande partie de la tige d'une chaussure (40) en matériau composite conforme à l'une quelconque des revendications 1 à 6, ce procédé comportant les étapes qui consistent à :
- préparer au moins une feuille dudit matériau composite ayant une longueur, une largeur et une épaisseur prédéterminées ;
- découper dans ladite feuille, suivant le patron prévu, le ou les morceaux (41, 46, 47) destinés à former ladite tige (40a) ;
- le cas échéant, découper dans d'autres feuilles d'un autre matériau approprié non-élastique d'autres morceaux (50) nécessaires pour compléter ladite tige (40a) ;
- assembler par piqures (56, 58) tous lesdits morceaux (41, 46, 47, 50) pour former ladite tige (40a) ;
- placer la tige (40a) sur une forme pour monter et terminer la chaussure (40) ;
caractérisé en ce qu'il comporte également les étapes suivantes :
- avant de découper les morceaux (41, 46, 47) de matériau composite, on détermine ceux de ces morceaux qui devront être légèrement étirés selon au moins une direction lorsque la chaussure (40) sera en position sur le pied de la personne qui la portera, et on calcule en fonction de cet étirement prévu de chaque morceau (41, 46, 47) correspondant une forme de celui-ci présentant dans ladite direction d'étirement (45, 49) une dimension plus petite que celle qu'aurait le morceau (41a, 46a, 47a) correspondant s'il était réalisé en cuir ordinaire ;
- lors de l'assemblage de ladite tige (40a), on étire lesdits morceaux (41, 46, 47) selon les prévisions, et on limite cet étirement à la valeur prévue en fixant sur ladite tige (40a) des bandes (52, 53, 54) de longueur prédéterminée d'un matériau non-élastique que l'on élimine lorsque la chaussure (40) est terminée.

9. Objet conforme à la revendication 7, caractérisé en ce que cet objet est une chaussure (40) dont la tige (40a) est réalisée par la mise en oeuvre du procédé conforme à la revendication 8.

## Claims

1. A composite material (1, 1a, 9, 9a, 13) based on leather and comprising:
- a core (2, 14, 21) comprising an elastic sheet which can be substantially drawn out in reversible manner by tension (F) in at least one direction of elasticity;
- a leather sheet (3, 3a, 3b, 6, 16, 22) on at least one surface of the core (2, 14, 21) and firmly adhering thereto at all points on the surface thereof, the leather sheet being stuck to the elastic sheet (2, 14, 21) when the elastic sheet is stretched and drawn out by a predetermined tension (F) lower than its elastic limit, the tension being removed after the adhesive sets;
- the elastic sheet (2, 14, 21) when stretched develops a predetermined return force (G) sufficient to contract the composite material (1, 1a, 9, 9a, 13) when the tension (F) is released,
characterised in that each leather sheet (3, 3a, 3b, 8, 16, 22) has a thickness between about 0.2 and 0.6 mm.

2. A material according to claim 1, characterised in that its elastic drawing-out ratio is between about 5% and 40%.

3. A material according to claim 1 or 2, characterised in that its elastic drawing-out ratio is between about 5 and 15%.

4. An elastic material according to any of claims 1 to 3, characterised in that each leather sheet has a thickness between about 0.2 and 0.4 mm.

5. A composite material (1, 9, 13) according to any of claims 1 to 4, characterised in that the elastic sheet is an elastic fabric comprising fibres which are elastic in at least one direction of weaving.

6. A material according to any of claims 1 to 4, characterised in that the core is in the form of a homogenous sheet (14) of elastomer, extensible in all directions in its plane.

7. An object characterised in that it is manufactured by using the composite material according to any of claims 1 to 6.

8. A method of constructing the larger part of the upper of a shoe (40) of composite material according to any of claims 1 to 6, the method comprising the steps consisting in:
- preparing at least one sheet of the composite material having a predetermined length, width and thickness;
- cutting one or more pieces (41, 46, 47) from the sheet, in accordance with the template provided, in order to form the upper (40a);
- if necessary, cutting other pieces (50) from other sheets of another suitable non-elastic material as required for completing the upper (40a);
- fitting together all the pieces (41, 46, 47, 50) by stitching (56, 58) to form the upper (40a) and
- placing the upper (40a) on a last in order to assemble and complete the shoe (40),
characterised in that it also comprises the following steps:
- before the pieces (41, 46, 47) of composite material are cut, those pieces which must be slightly stretched in at least one direction when the shoe (40) is in position on the wearers' foot are picked out, and a shape for each corresponding piece (41, 46, 47) is calculated depending on the planned stretching thereof, the shape being smaller in the direction of stretching (45, 49) than the size which the corresponding piece (41a, 46a, 47a) would have if made of ordinary leather, and
- when the upper (40a) is fitted together, the pieces (41, 46, 47) are stretched according to plan and the stretch is limited to the planned value by securing strips (52, 53, 54) of predetermined length of a non-elastic material on the upper (40a) and removing them when the shoe (40) is complete.

9. An object according to claim 7, characterised in that the object is a shoe (40) having an upper (40a) which can be constructed by working the method according to claim 8.

## Patentansprüche

1. Verbundwerkstoff (1, 1a, 9, 9a, 13) auf der Basis von Leder, der folgendes aufweist:
- einen Kern (2, 14, 21), der aus einem elastischen Blatt besteht, das unter der Wirkung einer Zugkraft (F) nach wenigstens einer Elastitizitätsrichtung im wesentlichen reversibel gedehnt werden kann;
- an wenigstens einer der Seiten des Kerns (2, 14, 21) ein daran fest an allen Flächenpunkten haftendes Blatt (3, 3a, 3b, 8, 16, 22) aus Leder, das auf das elastische Blatt (2, 14, 21) geklebt wurde, während dieses unter der Wirkung einer vorbestimmten Zugkraft (F) unter seiner Elastizitätsgrenze gestreckt und gedehnt wurde, wobei diese Zugkraft nach dem Aushärten des Klebers abgebaut wurde;
- wobei das elastische Blatt (2, 14, 21) im gestreckten Zustand eine vorbestimmte Rückstellkraft (G) entwickelt, die ausreicht, um die Schrumpfung des Verbundwerkstoffs (1, 1a, 9, 9a, 13) zu ermöglichen, wenn die Zugkraft (F) abgebaut ist;
dadurch gekennzeichnet, daß jedes Lederblatt (3, 3a, 3b, 8, 16, 22) eine Dicke von etwa 0,2 bis 0,6 mm besitzt.

2. Werkstoff nach Anspruch 1, dadurch gekennzeichnet, daß seine elastische Dehnungsrate etwa zwischen 5 % und 40 % liegt.

3. Werkstoff nach einem der Ansprüche 1 oder 2, dadurch gekennzeichnet, daß seine elastische Dehnungsrate etwa zwischen 5 und 15 % liegt.

4. Elastischer Werkstoff nach einem der Ansprüche 1 bis 3, dadurch gekennzeichnet, daß jedes Lederblatt eine Dicke von etwa 0,2 bis 0,4 mm besitzt.

5. Verbundwerkstoff (1, 9, 13) nach einem der Ansprüche 1 bis 4, dadurch gekennzeichnet, daß das elastische Blatt ein elastisches Gewebe ist, das in wenigstens einer Webrichtung elastische Fasern aufweist.

6. Werkstoff nach einem der Ansprüche 1 bis 4, dadurch gekennzeichnet, daß das Innenblatt durch ein homogenes Elastomerblatt (14) gebildet ist, das in seiner Ebene in allen Richtungen dehnbar ist.

7. Gegenstand, dadurch gekennzeichnet, daß er unter Verwendung des Verbundmaterials nach einem der Ansprüche 1 bis 6 hergestellt ist.

8. Verfahren zur Herstellung des größten Teils des Oberteils eines Schuhs (40) aus einem Verbundwerkstoff nach einem der Ansprüche 1 bis 6, wobei dieses Verfahren die folgenden Schritte umfaßt:
- wenigstens ein Blatt des Verbundwerkstoffs mit einer vorbestimmten Länge, Breite und Dicke wird vorbereitet;
- aus dem Blatt werden nach dem vorgesehenen Muster das oder die Stücke (41, 46, 47) ausgeschnitten, die zur Bildung des Oberteils (40a) bestimmt sind;
- gegebenenfalls werden aus weiteren Blättern aus einem anderen geeigneten, nicht elastischen Material weitere Stücke (50) ausgeschnitten, die zur Fertigstellung des Oberteils (40a) erforderlich sind;
- alle Stücke (41, 46, 47, 50) werden zur Bildung des Oberteils (40a) durch Nähte (56, 58) zusammengefügt;
- das Oberteil (40a) wird auf eine Form gesetzt, um den Schuh (40) zu montieren und fertigzustellen;
dadurch gekennzeichnet, daß es auch die folgenden Schritte umfaßt:
- vor dem Ausschneiden der Stücke (41, 46, 47) aus Verbundwerkstoff werden diejenigen Stücke bestimmt, die nach wenigstens einer Richtung leicht gestreckt sein müssen, wenn sich der Schuh (40) an Position am Fuß der Person befindet, die in trägt, und in Abhängigkeit von diesem vorgesehenen Strecken jedes entsprechenden Stücks (41, 46, 47) wird eine Form dafür berechnet, die in der Streckrichtung (45, 49) eine kleinere Abmessung aufweist, als sie das entsprechende Stück (41a, 46a, 47a) hätte, wenn es aus gewöhnlichem Leder hergestellt wäre;
- beim Zusammenfügen des Oberteils (40a) werden die Stücke (41, 46, 47) nach den Vorhersagen gestreckt, und dieses Strecken wird auf den vorgesehenen Wert begrenzt, indem an dem Oberteil (40a) Bänder (52, 53, 54) mit vorbestimmter Länge aus einem nicht elastischen Material befestigt werden, die beseitigt werden, wenn der Schuh (40) fertiggestellt ist.

9. Gegenstand nach Anspruch 7, dadurch gekennzeichnet, daß dieser Gegenstand ein Schuh (40) ist, dessen Oberteil (40a) durch die Durchführung des Verfahrens nach Anspruch 8 hergestellt ist.
